**Europäisches Patentamt**

**European Patent Office**

**Office européen des brevets**

(19)

(11) Veröffentlichungsnummer: **0 011 131**
**B1**

(12) **EUROPÄISCHE PATENTSCHRIFT**

(45) Veröffentlichungstag der Patentschrift: **15.12.82**

(21) Anmeldenummer: **79103857.3**

(22) Anmeldetag: **08.10.79**

(51) Int. Cl.³: **H 02 G 3/14,** H 01 H 9/02,
H 02 B 1/04

(54) Installationsgerät mit schraubenloser Abdeckung.

(30) Priorität: **20.10.78 DE 2845830**

(43) Veröffentlichungstag der Anmeldung:
**28.05.80 Patentblatt 80/11**

(45) Bekanntmachung des Hinweises auf die Patenterteilung:
**15.12.82 Patentblatt 82/50**

(84) Benannte Vertragsstaaten:
**AT FR IT SE**

(56) Entgegenhaltungen:
**DE - A - 1 465 323**
**DE - A - 2 426 144**
**DE - U - 7 240 155**

(73) Patentinhaber: **SIEMENS AKTIENGESELLSCHAFT**
**Berlin und München**
**Postfach 22 02 61**
**D-8000 München 22 (DE)**

(72) Erfinder: **Rollinger, Ferdinand**
**Karlsbader Strasse 6**
**D-8400 Regensburg (DE)**

Courier Press, Leamington Spa, England.

### Installationsgerät mit schraubenloser Abdeckung

Die Erfindung bezieht sich auf ein Installationsgerät nach Oberbegriff des Patentanspruchs 1. Ein solches Installationsgerät ist beispielsweise aus DE—A1—24 26 144 bekannt. Auf ein derartiges Installationsgerät bezieht sich auch die DE—U—72 40 155.

Solche Installationsgeräte weisen in der Regel ein flaches Handbedienungsorgan in einer rahmenartigen Abdeckplatte auf. Häufig ist im Gerätesockel kein Raum für einen Eingriff von Federelementen, die zur Befestigung der Abdeckung am Gerätesockel üblicherweise erforderlich sind. Solche Schwierigkeiten treten nicht nur bei mechanischen Schaltern, die beispielsweise durch Wippen betätigt werden, auf; sie treten besonders bei elektronischen Schaltern und Helligkeitsstellern auf. Elektronische Schalter können allgemein mit Ableitströmen oder kapazitiv arbeiten.

Bei einer bekannten Befestigung einer Abdeckung eines elektrischen Installationsgerätes (DE—A1—24 26 144) sind an der Abdeckung mit dem Handbetätigungsorgan an ihrem unteren Rand zwei parallele elastische Bänder angeformt, die Rastnocken bilden, welche sich in Mulden verrasten, die um den Umfang eines Zapfens verlaufen. Abdeckung und Bedienungsorgan können sich daher im wesentlichen nur auf eine Position einstellen, so daß ein Putzausgleich nicht möglich ist.

Für Sensor-Schalter und Sensor-Helligkeitssteller wird eine Abdeckung benötigt, die an der Bedienseite mit einer großflächigen Berührungsplatte aus elektrisch leitendem Material abschließt. Diese Berührungsplatte, bzw. ein Träger, an dem sie befestigt ist, soll über dem Gerätesockel zentrisch und kantenparallel schraubenlos zu befestigen sein, wobei auch eine Abdeckplatte, die den Bedienungsbereich der Abdeckung rahmenartig umgibt, gleichfalls zu befestigen ist.

Handbedienungsorgan und Abdeckplatte werden üblicherweise nach dem Prinzip von Zapfen und Buchse am Gerätesockel lösbar gehalten. Problematisch ist dabei, daß in den Gerätesockel wegen der elektronischen Bauteile nicht an allen Stellen und nicht tief eingedrungen werden kann. Es ist daher schwierig, einen Putz- und Tapeten-Ausgleich zu erreichen. Andererseits darf das Abziehen des Isolierstoffkörpers, in dem die Berührungsplatte angeordnet ist, nur mittels Werkzeug und unter Aufwendung einer bestimmten Mindestkraft möglich sein. Üblicherweise wird zum Abziehen unter der Abdeckplatte eingegriffen und diese zusammen mit dem Handbedienungsorgan abgezogen.

Um einen Putzausgleich zu ermöglichen ist bei einer bekannten Abdeckung (DE—U—72 40 155) ein haarnadelförmiges Federelement in einem mit Durchbrüchen versehenen Kanal der Abdeckung angeordnet, das in gerillte Zapfen in unterschiedlicher Zapfenhöhe eingreifen kann. Hierbei sind jedoch die Abzugskräfte, ebenso schwach wie die Montagekräfte.

In der Regel ist also entweder der Putzausgleich, um unterschiedliche Putzhöhen hinsichtlich der Einbautiefe des Gerätes auszugleichen, nur ungenügend oder die Kraft zum Abziehen der Abdeckung läßt sich in den geforderten Grenzen nur schlecht einhalten.

Der Erfindung liegt die Aufgabe zugrunde, bei einem Installationsgerät der eingangs geschilderten Art ohne Eingriff in den Gerätesockel einen sicheren Halt des Handbedienungsorgans bei langem Weg für einen Putzausgleich zu erzielen.

Die Lösung der geschilderten Aufgabe erfolgt durch ein Installationsgerät mit den kennzeichnenden Merkmalen von Anspruch 1.

Hierbei wird das Handbetätigungsorgan am Gerätesockel lösbar befestigt. Man benötigt hierfür keine Zapfen der Abdeckung, die in den Gerätesockel eingreifen. Dennoch lassen sich lange Wege längs des Halsstücks des gerätesockels für Putz- und Tapeten-Ausgleich nutzen. Die Abzugskraft bzw. Haltekraft des Isolierstoffkörpers läßt sich dadurch einstellen, daß man die Länge der Schenkel des Winkelstücks geeignet lang ausbildet. Die Dicke des Isolierstoffkörpers bietet wegen des flachen Aufbaues der federnden Halterung ausreichend Raum, um diese aufzunehmen.

Ein flaches, insbesondere haarnadelförmiges Federelement, das in einer zum Halsstück senkrecht ausgerichteten Aufnahme liegt, ist an sich bekannt (DE—U—72 40 155). Hierbei kann das Federelement in Rillen von zwei Zapfen nur in wählbarer Zapfenhöhe eingreifen. Beim Installationsgerät nach der Erfindung kommt man mit einem einzigen Zapfen bzw. Halsstück aus und der Putzausgleich stellt sich unter dem Druck der federnden Winkelstücke selbsttätig ein. Dadurch liegt die Abdeckplatte satt auf Putz oder Tapete auf, so daß klappern vermieden wird.

Es ist günstig, wenn die Aufnahme für die Feder durch eine stegumrandete Nut gebildet wird, die überstehende Führungsränder für einen Schieber bildet, der an einer vom Winkelstück abgewandten Stirnseite einen Anschlag findet und das Winkelstück mittels einer Zunge übergreift. Eine solche Ausbildung ist materialsparend und bietet eine sichere Auflage auch für einen breit ausgebildeten Schenkel des Winkelstücks. Ein breiter, auf der Abdeckplatte aufstehender Schenkel des Winkelstücks ergibt dann eine besonders kippsichere Halterung. Bei einem solchen Installationsgerät läßt sich das Handbedienungsorgan bei wenig Teilen einfach und schnell montieren.

Wenn das Winkelstück zwischen seinen Schenkeln einen stumpfen Winkel einschließt und einen schmalen und einen breiten Schenkel aufweist, erzielt man auch bei hinsichtlich der Oberfläche rechtwinklig ausgebildeten Seiten der Stege bzw. Ausnehmungen für das Winkelstück einen gefederten Halt der Abdeckung längs des Weges für den Toleranzausgleich.

Es ist vorteilhaft, wenn die Aufnahme an ihrer vom Halsstück des Gerätesockels abgewandten Seite einen Quersteg als Auflage für das Winkelstück bildet, das durch stehende Stege überragt wird, die auf der Seite zur Ausnehmung vor dem Quersteg ausgebildet sind. Ein breiter Schenkel findet dann nicht nur eine sichere Auflage, sondern auch einen randseitigen Anschlag, was die Sicherheit gegen Verdrehen fördert.

Wenn zu den Führungsrändern für den Schieber auf der Frontseite des Handbedienungsorgans eine den Grundriß der Führungsränder übergreifende Aussparung ausgebildet ist, kann man das Handbedienungsorgan mit gegenläufigen Werkzeugen herstellen, ohne Seitenschieber zu benötigen.

Es ist günstig und bei einem schmalen auf der Abdeckplatte aufstehenden Schenkel genügt es, daß der Schieber seitlich neben seiner Zunge Anschläge zum Winkelstück bildet.

Wenn die stehenden Stege so lang ausgebildet sind, daß sie auf der Abdeckung bei zusammengedrückter Feder aufstehen, erreicht man auch bei großem Druck auf das Handbedienungsorgan eine sichere Begrenzung des Federweges.

Nach einer Ausgestaltung sind zusätzlich Führungszapfen ausgebildet, die in Ausnehmungen einer Gerätetragplatte eingreifen. Durch solche Führungszapfen, die auch durch die Geräteplatte hindurchgreifen und auch in die Gehäusewand des Gerätesockels eingreifen können, kann man eine zusätzliche Sicherung gegen Verdrehen des Isolierstoffkörpers erreichen.

Das Installationsgerät soll nun anhand von in der Zeichnung grob schematisch wiedergegebenen Ausführungsbeispielen für einen Sensor-Schalter und Sensor-Helligkeitssteller näher erläutert werden:

In Fig. 1 ist das Installationsgerät im Längsschnitt wiedergegeben.

In Fig. 2 sind in der Darstellungsweise nach Fig. 1, wobei das Installationsgerät jedoch abgebrochen wiedergegeben ist, zwei abgewandelte Ausführungsformen dargestellt. Ein Ausführungsbeispiel ist in der linken Hälfte für ein großflächiges Handbedienungsorgan und in der rechten Hälfte für ein kleinflächiges Handbedienungsorgan dargestellt, das sich in seiner Form jeweils in ein Programm für Installationsgeräte mit großflächigen Bedienungsorganen und in ein solches für normalflächige Bedienungsorgane einfügt.

In Fig. 3 ist das Handbedienungsorgan nach Fig. 1 in Ansicht von unten dargestellt, wobei links die Ausführungsform für ein großflächiges Bedienungsorgan und rechts für ein normalflächiges veranschaulicht ist.

In Fig. 4 ist die Ansicht des Schnittes längs IV—IV nach Fig. 3 wiedergegeben.

In Fig. 5 ist die Aufsicht auf die Tragplatte des Installationsgerätes nach Fig. 2 bei abgenommenen Handbedienungsorgan und entfernter Abdeckplatte wiedergegeben.

In Fig. 6 ist die Ansicht des Schnittes VI—VI nach Fig. 3 dargestellt.

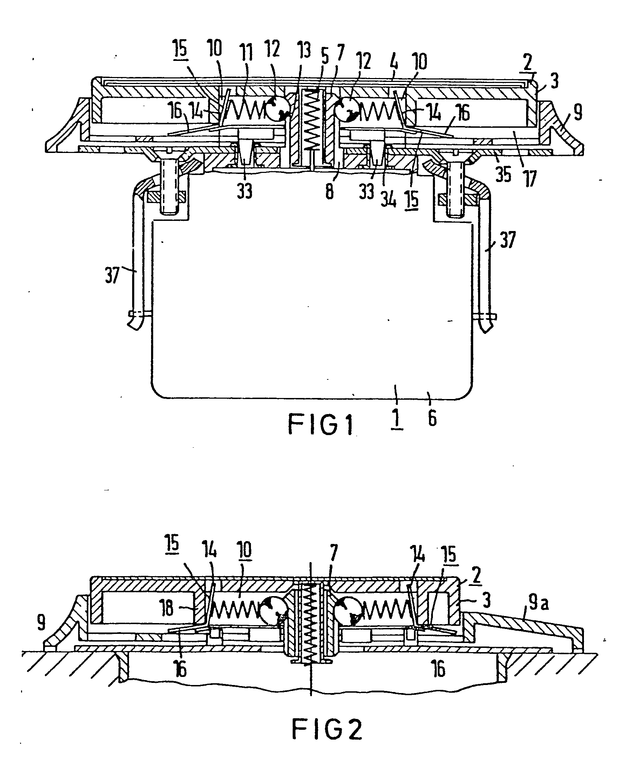

Das Installationsgerät 1 nach Fig. 1 ist im Ausführungsbeispiel ein Sensor-Schalter kombiniert mit einem Sensor-Helligkeitssteller. Solche Geräte werden häufig auch Dimmer genannt. Sie können Leuchten ein- und ausschalten und die Helligkeit der Lampen in gewünschter Weise einstellen. Das Handbedienungsorgan 2 trägt auf einem Isolierstoffkörper 3 eine Berührungsplatte 4 aus elektrisch leitendem Material. Die Berührungsplatte 4 kann eingerastet oder aufgeklebt sein. An der Berührungsplatte 4 steht zumindest ein Druckkontakt 5 des Gerätesockels 6 auf, der in einem Halsstück 7 des Sockels 6 angeordnet ist. Dieses Halsstück 7 greift in eine Ausnehmung 8 des Isolierstoffkörpers 3 ein.

Das Handbedienungsorgan 2 ist nach dem Prinzip von Zapfen und Buchse am Gerätesockel 6 bei zwischenliegender Abdeckplatte 9 abziehbar gehalten. Hierfür bildet der Isolierstoffkörper 3 zumindest eine zum Halsstück 7 des Gerätesockels 6 senkrecht ausgerichtete Aufnahme 10 für eine Feder 11, die mittels eines gleitfähigen Kopfstücks 12 in eine am Halsstück 7 des Gerätesockels 6 ausgebildete Rinne 13 eingreift. Die Rinne 13 ist endständig überhöht ausgebildet, wie es beispielsweise aus der Zeichnung zu ersehen ist. Dadurch finden die beiden kugelförmig ausgebildeten Kopfstücke 12 der Federn 11 jeweils einen Anschlag, so daß das Handbedienungsorgan 2 in seiner höchsten Stellung, in die es durch ein Winkelstück 15 gedrückt wird, gesichert its. Erst wenn die so gegebenen Abzugskräfte überwunden werden, läßt sich das Handbedienungsorgan beispielsweise durch Untergreifen der Abdeckplatte 9 abziehen.

Die Feder 11 in jeder der Aufnahmen 10 steht auf ihrer zum Kopfstück 12 anderen Seite auf einem Schenkel 14 eines im Isolierstoffkörper 3 gehaltenen Winkelstücks 15 auf, dessen freier Schenkel 16 an der Abdeckplatte 9 aufsteht. Das Winkelstück 15 drückt das Handbedienungsorgan 2 gefedert an die endständige Überhöhung der Rinne 13 an, wobei der Spalt 17 zwischen Handbedienungsorgan 2 und Abdeckplatte 9 für den Ausgleich zu hoher Putzschichten und Tapetenschichten zur Verfügung steht. Die Abdeckplatte 9 wird dann in diesem Spalt 17 hochgehoben. Dadurch sind sowohl Handbedienungsorgan 2 als auch Abdeckplatte 9 in jeder Einbaulage klappersicher gehalten.

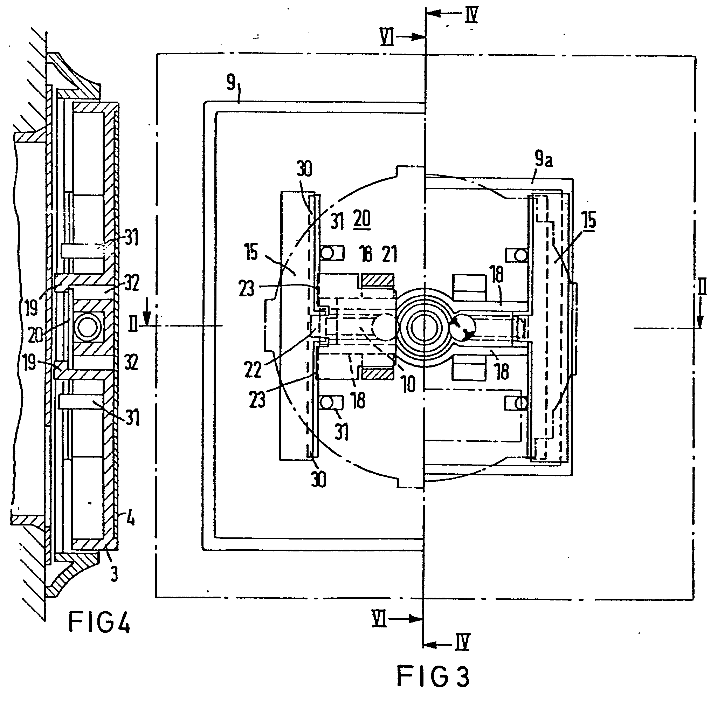

Die Aufnahme 10 wird im Ausführungsbeispiel durch eine von Stegen 18 nach Fig. 3 umrandete Nut gebildet, die überstehende Führungsränder 19 nach Fig. 4 bilden. Unter den Führungsrändern 19 ist ein Schieber 20 geführt, wie er in Fig. 3 in der linken Hälfte dargestellt ist. Dieser Schieber 20 findet an seiner vom Winkelstück 15 abgewandten Stirnseite 21 einen Anschlag und er übergreift mittels einer Zunge 22 das Winkelstuck 15. Nachdem man das Winkelstück 15 eingesetzt hat, kann man den Schieber 20 einführen und verrasten. Der Schieber 20 bildet dafür seitlich neben seiner Zunge 22 Anschläge 23.

Die Winkelstücke 15 schließen zwischen ihren Schenkeln 14 und 16 in den Ausführungsbeispielen nach den Fig. 1 und 2 einen stumpfen Winkel ein, wie aus den Fig. 1 und 2 zu ersehen ist. Hierdurch ergibt sich auch bei hinsichtlich der Oberfläche, also der Berührungsplatte 4, rechtwinkligen Seiten der Stege 18 für die Abdeckung 9 bzw. 9a ein gefederter Halt.

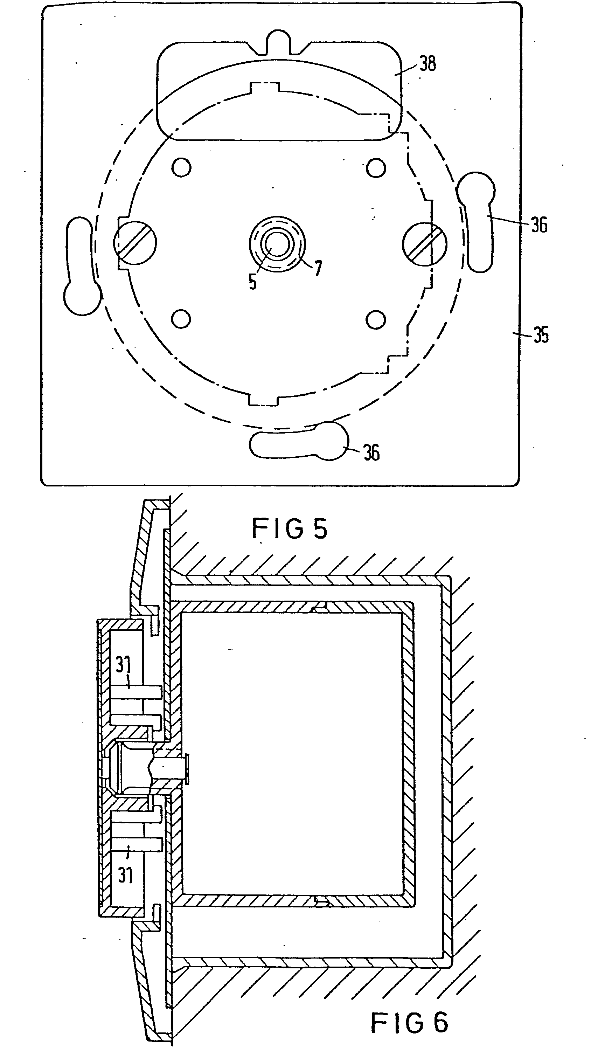

Das Winkelstück 15 weist vorteilhafterweise einen schmalen Schenkel 14 auf, der in einer Ausnehmung wenig Platz benötigt und einen breiten Schenkel 16 auf, der auf der Abdeckplatte 9 bzw. 9a breit aufliegt. Die Aufnahme 10 kann hierbei an ihrer vom Halsstück 7 des Gerätesockels 6 abgewandten Seite einen Quersteg 30 als Auflage für das Winkelstück 15 bilden, wie es aus den Figuren 3 und 6 zu ersehen ist. Wenn dieser Quersteg 30 durch stehende Stege 31 überragt wird, die auf der Seite zur Aufnahme 10 vor dem Quersteg 30 ausgebildet sind, kann man auch einen sehr breiten Schenkel 16 eines Winkelstücks 15 verdrehungssicheren Halt bieten, so daß auch großflächige Bedienungsorgane verdrehungssicher gelagert werden.

Wenn man zu den Führungsrändern 19 für den Schieber 20 auf der Frontseite des Isolierstoffkörpers in diesem eine den Grundriß der Führungsränder übergreifende Aussparung 32 nach Fig. 4 ausbildet, kann man den Isolierstoffkörper 3 mit gegenläufigen Werkzeugen ohne Seitenschieber aus Kunststoff herstellen.

Man kan die stehenden Stege 31 nach den Figuren 3, 4 und 6 so lang ausbilden, daß sie auf der Abdeckplatte 9 bei zusammengedrückter Feder 11 aufstehen, wie es in Fig. 4 veranschaulicht ist.

Am Isolierstoffkörper 3 kann man nach Fig. 1 zusätzlich Führungszapfen 33 ausbilden, die in Ausnehmungen 34 einer Gerätetragplatte 35 bzw. der Oberseite des Gehäuses des Gerätesockels eingreifen. Dadurch sichert man das Handbedienungsorgan in gewohnter Weise gegen Verdrehen, jedoch ohne hier Federmittel zu benötigen, weshalb wenig Platz beansprucht wird und ein Putzausgleich dennoch möglich ist.

In der Aufsicht nach Fig. 5 ist das Halsstück 7 mit einem darin geführten Druckkontakt 5 zu ersehen. Ausschnitte 36 in der Tragplatte 35 dienen in üblicher Weise zum Befestigen an einer Einputzdose, wenn man nicht die Befestigung mit Krallen 37 nach Fig. 1 vorzieht. Der Ausschnitt 38 nach Fig. 5 ermöglicht es, Leitungen an Anschlußklemmen heranzuführen.

**Patentansprüche**

1. Installationsgerät (1) mit schraubenloser Abdeckung, dessen Handbedienungsorgan (2) auf einem Halsstück (7) des Gerätesockels (6) aufsteht und nach dem Prinzip von Zapfen und Buchse am Gerätesockel (6) und zwischenliegender Abdeckplatte (9) abziehbar gehalten ist, dadurch gekennzeichnet, daß das Handbedienungsorgan (2) zumindest eine zum Halsstück (7) des Gerätesockels (6) senkrecht ausgerichtete Aufnahme (10) für eine Feder (11) bildet, die mittels eines gleitfähigen Kopfstückes (12) in eine am Halsstück (7) des Gerätesockels in axialer Richtung ausgebildete, endständig überhöhte Rinne (13) eingreift, und die auf ihrer anderen Seite auf einem Schenkel (14) eines im Handbedienungsorgan (2) gehaltenen Winkelstücks (15) aufsteht, dessen freier Schenkel (16) an der Abdeckplatte (9) aufsteht.

2. Installationsgerät nach Anspruch 1, dadurch gekennzeichnet, daß die Aufnahme (10) durch eine stegumrandete Nut gebildet wird, die überstehende Führungsränder (19) für einen Schieber (20) bildet, der an einer vom Winkelstück (15) abgewandten Stirnseite (21) einen Anschlag findet und das Winkelstück (15) mittels einer Zunge (22) übergreift.

3. Installationsgerät nach Anspruch 1, dadurch gekennzeichnet, daß das Winkelstück (15) zwischen seinen Schenkeln (14, 16) einen stumpfen Winkel einschließt und einen schmalen (14) und einen breiten Schenkel (16) aufweist.

4. Installationsgerät nach Anspruch 1, dadurch gekennzeichnet, daß die Aufnahme (10) an ihrer vom Halsstück des Gerätesockels (6) abgewandten Seite einen Quersteg (30) als Auflage für das Winkelstück (15) bildet, das durch stehende Stege (31) überragt wird, die auf der Seite zur Aufnahme (10) vor dem Quersteg (30) ausgebildet sind.

5. Installationsgerät nach den Ansprüchen 1 und 2, dadurch gekennzeichnet, daß zu den Führungsrändern (19) für den Schieber (20) auf der Frontseite des Handbedienungsorgans (2) eine den Grundriß der Führungsränder übergreifende Aussparung (32) ausgebildet ist.

6. Installationsgerät nach den Ansprüchen 1 und 2, dadurch gekennzeichnet, daß der Schieber (20) seitlich neben seiner Zunge (22) Auschläge (23) zum Winkelstück (15) bildet.

7. Installationsgerät nach den Ansprüchen 1 und 4, dadurch gekennzeichnet, daß die stehenden Stege (31) so lang ausgebildet sind, daß sie auf der Abdeckplatte (9) bei zusammengedrückter Feder (11) aufstehen.

8. Installationsgerät nach den Ansprüchen 1 und 7, dadurch gekennzeichnet, daß zusätzlich Führungszapfen (33) ausgebildet sind, die in Ausnehmungen (34) einer Gerätetragplatte (35) eingreifen.

## Revendications

1. Appareil d'installation (1) à couvercle sans vis, dont l'élément de commande manuelle (2) est monté sur une collerette (7) du socle (6) de l'appareil et est maintenu de façon détachable, selon le principe de tourillon et douille, sur le socle (6) de l'appareil et sur une plaque de recouvrement (9), caractérisé par le fait que l'élément de commande manuelle (2) forme au moins un logement (10) s'étendant perpendiculairement à la collerette (7) du socle (6) de l'appareil, servant à recevoir un ressort (11) qui, à l'aide d'une pièce de tête (12) à caractère glissant, pénètre dans une gorge (13) formée en direction axiale sur la collerette (7) du socle de l'appareil et comportant un épaississement latéral du côté de l'extrémité du tourillon, et dont l'autre extrémité porte contre une branche (14) d'une pièce coudée (15) maintenue dans l'organe de commande manuelle (2) et dont la branche libre (16) porte contre la plaque de recouvrement (9).

2. Appareil d'installation selon la revendication 1, caractérisé par le fait que le logement (10) est formé par une cuvette à collet périphérique formant des bords de guidage saillants (19) pour un coulisseau (20) qui trouve, au niveau du côté frontal (21) éloigné de la pièce coudée (15), une butée et qui passe sur cette pièce coudée (15) au moyen d'une languette (12).

3. Appareil d'installation selon la revendication 1, caractérisé par le fait que la pièce coudée (15) forme un angle obtus entre ses branches (14, 16) et possède une branche étroite (14) et une branche large (16).

4. Appareil d'installation selon la revendication 1, caractérisé par le fait que le logement (10) forme, sur son côté éloigné du tourillon du socle (6) de l'appareil, une barrette transversale (30) servant d'appui pour la pièce coudée (15) qui est débordée par des barrettes saillantes (31) qui sont formées du côté du logement (10) à l'avant de la barrette transversale (30).

5. Appareil d'installation selon les revendications 1 et 2, caractérisé par le fait que pour les bords de guidage (19) pour le coulisseau (20), il est formé sur le côté frontal de l'élément de commande manuelle (2), une ouverture (32) s'étendant au delà de la projection horizontale des bords de guidage.

6. Appareil d'installation selon les revendications 1 et 2, caractérisé par le fait que le coulisseau (20) forme sur le côté près de sa languette (22) des butées (23) pour la pièce coudée (15).

7. Appareil d'installation selon les revendications 1 et 4, caractérisé par le fait que les barrettes saillantes (31) ont une longueur telle qu'elles portent sur la plaque de recouvrement (9) lorsque le ressort (11) est comprimé.

8. Appareil d'installation selon les revendications 1 et 7, caractérisé par le fait qu'il est prévu, en plus, des ergots ou tourillons de guidage (33) qui pénètrent dans des ouvertures (34) d'une plaque de support (35) de l'appareil.

## Claims

1. An installation device (1) having a screwless cover, the manually-operated element (2) of which stands on a neck portion (7) of the base (6) of the device and is supported on the base (6) of the device and an intermediate cover plate (9) so as to be capable of being pulled off on the plug-and-socket principle, characterised in that the manually-operated element (2) forms at least one receiving member (10), aligned perpendicularly to the neck portion (7) of the base (6) of the device, to receive a spring (11) which, by means of a slidable head portion (12), engages in a groove (13) formed in the axial direction on the neck portion (7) of the base of the device and upstanding at its end, and which spring, at its other end, rests against a limb (14) of an angled member (15) which is supported on the manually-operated element (2) and the free limb (16) of which rests on the cover plate (9).

2. An installation device according to Claim 1, characterised in that the receiving member (10) is formed by a groove which is surrounded by a flange which forms projecting guide edges (19) for a slide (20), which slide finds a stop on its front face (21) facing away from the angled member (15) and has a tongue (22) which overlaps the angled member (15).

3. An installation device according to Claim 1, characterised in that the angled member (15) encloses an obtuse angle between its limbs (14, 16) and has a narrow limb (14) and a wide limb (16).

4. An installation device according to Claim 1, characterised in that, on its side which faces away from the neck portion of the base (6) of the device, the receiving member (10) forms a crosspiece (30) as support for the angled member (15) which is surmounted by upright flanges (31) formed on the side towards the receiving member (10) in front of the crosspiece (30).

5. An installation device according to Claims 1 and 2, characterised in that next to the guide edges (19) for the slide (20), on the front face of the manually-operated element (2), there is formed a recess (32) which encroaches into the outline of the guide edges.

6. An installation device according to Claims 1 and 2, characterized in that the slide (20) laterally adjacent its tongue (22) forms stops (23) for the angled member (15).

7. An installation device according to Claims 1 and 4, characterised in that the upright flanges (31) are so long that they extend to the cover plate (9) when the spring (11) is compressed.

8. An installation device according to Claims 1 and 7, characterised in that guide pins (33) are additionally provided which engage into recesses (34) of a supporting plate (35) of the base.

FIG 1

FIG 2

FIG4

FIG3

FIG 5

FIG 6